# EUROPEAN PATENT APPLICATION

(11) **EP 2 853 575 A1**
(43) Date of publication of application: **01.04.2015**
(21) Application number: 14186693.9
(22) Date of filing: 26.09.2014
(51) Int. Cl.: C09K 3/10

(54) **Fire sealing apparatus**

(30) Priority: 27.09.2013 GB 201317224
(71) Applicant: Intumescent Systems Limited, Barfreston Dover Kent CT15 7JG (GB)
(72) Inventor: Ward, Derek, Dover, Kent CT15 7JG (GB)
(74) Representative: Sayer, Robert David

(57) **Abstract**

A fire retardant sealant apparatus is disclosed, comprising a first sealant of flowable material including a graphite mix of silicon adhesive and a second sealant of flowable material including a latex emulsion with antifoam and dispersion fillers. There is also disclosed means to individually dispense said first and second sealants into an aperture extending through a wall of building to thereby provide a fire retardant seal within the aperture.

## Description

### Field of invention

The present invention relates to a fire sealing apparatus. More especially the invention relates to a fire sealing apparatus and a method of use of such apparatus for providing a fire retardant seal around within service holes through which extend PVC, UPVC, copper or steel pipes and cables.

### Background to the invention

The prevention of the spread of fire is a major consideration in building construction. Fire is able to spread quickly across the building through air gaps within the wall structures. A particular problem area is around service holes for pipe work or cables which extend through apertures within the walls between rooms.

Conventional fire prevention techniques include the provision of a sleeve that fits around the pipe work particularly around the entry points of the service holes within the walls. The sleeve carries intumescent material that expands in intense heat to fill any gap thereby preventing the spread of fire.

Such sleeves can be tricky to fit, particularly if the service hole is not uniform or uneven.

A further problem may occur if the installer does not have the correct sleeve sizes for the pipework or cabling which often vary in thickness.

The present invention seeks to alleviate the aforementioned problems by providing fire sealing apparatus in the form of flowable material locatable in portable dispenser. The flowable material once dispensed within the service hole provides an effective fire retardant seal within the aperture.

The present invention also seeks to provide sealing apparatus which comprises a combination of two different flowable materials which in combination provide an effective retardant seal.

The present invention also seeks to provide a method of dispensing a fire retardant seal within an aperture through a wall of a building.

### Statement of invention

According to a first aspect of the invention there is provided fire retardant sealant apparatus comprising a first sealant of flowable material including a graphite mix of silicon adhesive and a second sealant of flowable material including a latex emulsion with anti-foam and dispersion fillers, and means to individually dispense said first and second sealants into an aperture extending through a wall of building to thereby provide a fire retardant seal within the aperture.

According to a second aspect there is provided a method of forming as fire retardant seal within an aperture extending through a wall of a building, the method comprising the steps of :
dispensing a first sealant of flowable material including a graphite mix of silicon adhesive, within the aperture;
dispensing a second sealant of flowable material including a latex emulsion with anti-foam and dispersion fillers, over the first sealant.

### Brief description of the drawings

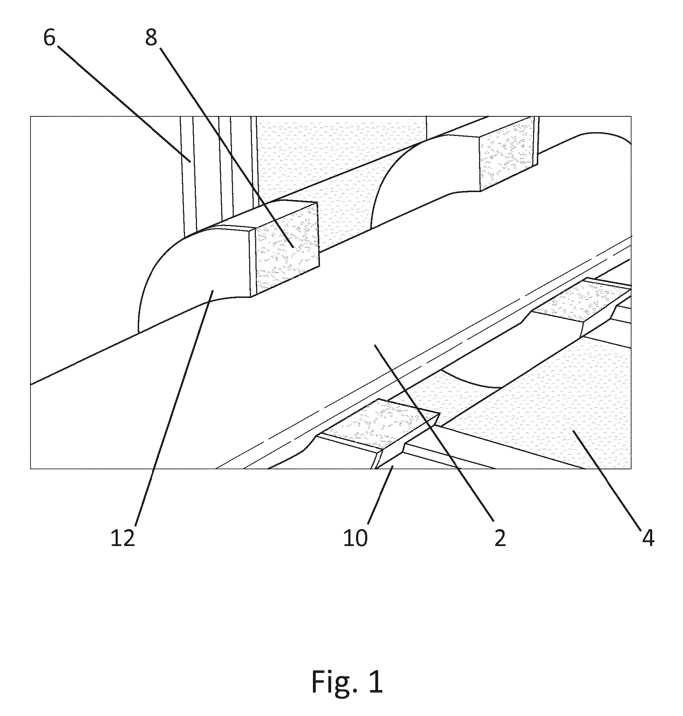

One embodiment of the invention will now be described by way of example only, with reference to the accompanying figure which provides a schematic illustration of fire sealant apparatus in the accordance with the present invention, in use.

### Detailed description of preferred embodiments

The present invention relates to apparatus for providing a fire retardant seal within an aperture extending through a wall of a building through which pipework or cabling extends.

The sealants combine, in use, to provide a fire retardant seal around PVC, UPVC, copper, steel pipework and cables.

The apparatus comprises two individual intumescent sealants used in combination. Both sealants are provided in tubular dispensers with a funnel outlet. The dispensers may include means to force the sealant from the dispensers such as those commonly used with similar sealants such as that marketed under the name Polyfilla^{®}.

The first sealant generally comprises graphite mix of silicon adhesive. The sealant may be, for example, a silicon mastic with 10 to 35% graphite.

A typical formulation for the first sealant is :
A biocide, for example that marketed under the name Acticide™ (0.140%), water (0.259%), an acrylin resin, for for example that marketed under the name Revacryl 387™ (37.336%), an anti-foaming agent, for example that marketed under the name Hi Mar DFC/31™ (0.078%), an aluminium hydroxide compound, for example that marketed under the name Apyral™ (1.867%), a filler powder for example that marketed under the name Microdol H400™ (31.113%), an emulsifier, for example that marketed under the name Viscoatex 730™ (0.607%) and a graphite (wet mix) (28.521%).

The second sealant generally comprises a white acrylic siliconised sealant. The sealant may be, for example, a latex emulsion with anti-foam and dispersion fillers.

A typical formulation for the second sealant is :
An organic base, for example that marketed under the name Melanime™ (11.737%), a polyol, for example that marketed under the name Pentaerythritol™ (11.737%), tap water (24.882%), an ammonium polyphosphate, for example that marketed under the name Exolit AP422™ (28.169%), an emulsifier, for example that marketed under the name Viscoatex 730™ (0.800%),a chlorinated paraffin for example that marketed under the name Chloropraffin 54L™ (4.694%), Titanium dioxide(4.694%), an anti-foaming agent, for example that marketed under the name Hi Mar DFC/31™ (0.467%), a biocide, for example that marketed under the name Acticide™ (0.188%), an ethylene glycol, for example that marketed under the name MEG™ (0.235%), a potassium pholyphosphate for example that marketed under the name Surfac K18™ (0.234%), an hydroxyethyl cellulose, for example that marketed under the name Tylose H6000™ (0.155%) and an emulsion, such as that marketed under the name Emultex 523™ (11.737%).

Both sealants may further include a compound marketed under the name Eccodis™.

The apparatus may be provided in the form of a kit. The kit is suitable for use with aluminium, copper, plastic and steel pipes with up to 60 mm diameter. The kit can also be applied to cables (including armoured cables, MICC and flexible cable types) up to 60 mm diameter.

The kit is designed for use in both plasterboard stud partitioning and solid substrate surfaces i.e. brick, block and concrete walls and ceilings.

A typical kit includes three 310ml tubes. The first and second tubes comprise the first sealant (the dark grey intumescent graphite compound) which expands during a fire sealing the service hole. The third tube comprises the second sealant for use a decorators finish and which can be fully painted over once cured.

The application of the sealants will now be described with reference to the figure. The figure shows pipe work 2 extending through a service hole 4 in a plasterboard or block wall 6.

The first sealant 8 is first dispensed within the service hole 4, from a depth of approximately 30 mm into the hole to approximately 10 mm from the front surface 10 of the hole 4.

The second sealant 12 is then dispensed to fill the void between the first sealant 8 to the front surface of the plasterboard or block wall 6.

The second sealant 12 is levelled with a spatula or similar tool. Once cured, the second sealant 12 can be painted over.

In the case of brick, block or concrete ceilings or walls the service hole should be formed 30 mm larger than the pipe or cable passing through i.e. approximately 15 mm all round.

In the case of hollow partition plasterboard walls, the service hole should be formed 40 mm larger than the pipe or cable passing through. A sponge may be placed in the void between the plasterboards, or glass wall in the void between the boards.

The fire retardant system has been tested to EN 1366-3 (2009) and provide two hours of fire protection and insulation in plasterboard hollow walls and brick or block walls.

It will be understood, that the various embodiments described herein have been described by way of example only and that modifications may be made thereto without departing from the spirit and scope of the present invention as defined in the accompanying claims.

## Claims

1. Fire retardant sealant apparatus comprising a first sealant of flowable material including a graphite mix of silicon adhesive and a second sealant of flowable material including a latex emulsion with anti-foam and dispersion fillers, and means to individually dispense said first and second sealants into an aperture extending through a wall of building to thereby provide a fire retardant seal within the aperture.

2. Apparatus according to claim 1, wherein the first sealant comprises a silicon mastic with 10 to 35% graphite.

3. Apparatus according to claim 2, wherein the first sealant includes a biocide, water, an acrylin resin, an anti-foaming agent, an aluminium hydroxide compound, a filler powder, an emulsifier, and a graphite wet mix.

4. Apparatus according to any of claims 1 to 3, wherein the second sealant comprises a white acrylic siliconised sealant.

5. Apparatus according to claim 4, wherein the second sealant comprises a latex emulsion with anti-foam and dispersion fillers.

6. Apparatus according to claim 4 or claim 5, wherein the second sealant includes an organic base, a polyol, an ammonium polyphosphate, an emulsifier, a chlorinated paraffin, titanium dioxide, an anti-foaming agent, a biocide, an ethylene glycol, a potassium pholyphosphate, an hydroxyethyl cellulose, and an emulsion.

7. A method of forming as fire retardant seal within an aperture extending through a wall of a building, the method comprising the steps of :
dispensing a first sealant of flowable material including a graphite mix of silicon adhesive, within the aperture; and
dispensing a second sealant of flowable material including a latex emulsion with anti-foam and dispersion fillers, over the first sealant.
